# EUROPÄISCHE PATENTSCHRIFT

(11) **EP 1 060 924 B1**
(45) Veröffentlichungstag und Bekanntmachung des Hinweises auf die Patenterteilung: **26.04.2006**
(21) Anmeldenummer: 00112525.1
(22) Anmeldetag: 13.06.2000
(51) Int. Cl.: B60J 7/06

(54) **Fahrzeugdach**
Vehicle roof
Toit de véhicule

(30) Priorität: 15.06.1999 DE 19927238
(43) Veröffentlichungstag der Anmeldung: 20.12.2000
(73) Patentinhaber: Webasto Vehicle Systems International GmbH, 82131 Stockdorf (DE)
(72) Erfinder: Bayer, Wolfgang, 81243 München (DE); Stenvers, Jürgen, 81375 München (DE)
(74) Vertreter: Wiese, Gerhard

(56) Entgegenhaltungen:
- DE-A- 4 336 278
- DE-C- 19 634 511
- FR-A- 2 757 803

## Beschreibung

Die Erfindung bezieht sich auf ein Fahrzeugdach mit einem über eine Absenkmechanik von einer angehobenen in eine abgesenkte Position bringbaren absenkbaren Dachteil, welches eine Verschlussvorrichtung umfasst, mittels der das absenkbare Dachteil sowohl in angehobener als auch in abgesenkter Position arretierbar ist, wobei die Verschlussvorrichtung bei angehobenem absenkbaren Dachteil mit einem ersten Gegenlager zusammenwirkt, das an einem zumindest zeitweise feststehenden Dachteil festgelegt ist.

Es sind vielfältige Möglichkeiten bekannt, ein absenkbares Dachteil, insbesondere ein absenkbares Dachteil eines Cabriolets, in angehobener sowie abgesenkter Position stabil zu arretieren. So ist beispielsweise in der DE 40 10 276 C2 eine klappbare Dachkonstruktion offenbart, die eine Dachtafel und eine mit der Dachtafel gelenkig verbundene Rückfenstertafel umfasst, deren unterer Kantenbereich verschwenkbar mit einem Heckteil der Karosserie verbunden ist. Die Dachtafel und die Rückfenstertafel sind beide durch Einklappen unter eine am Heckteil des Fahrzeugs vorgesehene Schutzhaube verstaubar und in ausgeklapptem Zustand an Längs- und Querholmen des Fahrgastraums gestützt und verriegelbar, zu welchem Zweck mehrere getrennte Verriegelungsmechanismen vorgesehen sind. Die Dachtafel ist an entgegengesetzten Seiten im frontwärtigen Bereich mit einem Dachtafel-Verriegelungsmechanismus versehen, und im mittleren Bereich vor der oberen Kante der Rückfenstertafel ist ein Rückfenster-Verriegelungsmechanismus vorgesehen, wobei diese beiden Verriegelungsmechanismen von Hand betätigt werden. Schließlich ist ein motorischer Schutzhauben-Verriegelungsmechanismus an der Heckteilkonstruktion angeordnet, um die Seitenkanten der Schutzhaube an der Heckteilkonstruktion eindeutig festzulegen. Die beiden erstgenannten Verriegelungsmechanismen dienen dazu, ein Flattern der Tafeln zu verhindern, wenn sich diese in der ausgeklappten Position befinden, wohingegen der Schutzhauben-Verriegelungsmechanismus die Aufgabe hat, das Flattern der Schutzhaube sowohl in der ausgeklappten Position als auch in der eingeklappten, verstauten Position der Tafeln zu unterbinden.

Aus der DE 43 24 708 C2 ist ein versenkbares Dach für Fahrzeuge mit einer eine Dachplatte und hintere Dachpfosten aufweisenden Dachschale bekannt, die mit den Dachpfosten voran der Länge nach in einen Unterbringungsraum zwischen seitlichen Bordwänden der Karosserie bewegbar ist, wonach es aufgerichtet in einer Fahrzeugquerebene gehalten ist. Die Heckscheibe ist von einer Gebrauchsstellung in eine Nichtgebrauchsstellung bewegbar, in der ihre Scheibenfläche der Dachplatte in geringem Abstand gegenüberliegt. Es sind Führungsmittel zur Bewegungssteuerung der Dachschale sowie der Heckscheibe vorgesehen, wobei die Dachschale über zwei seitlich im Unterbringungsraum angeordnete Schiebeführungen absenkbar ist und die Schiebeführungen unabhängig von den Führungsmitteln der Heckscheibe angeordnet sind. In den beiden Eckbereichen der Dachpfostenstirnseiten ist jeweils ein Gleitbolzen angeordnet, der in die zugeordnete Schiebeführung eingreift. Die beiden Schiebeführungen erstrecken sich unter nach vorn in Fahrtrichtung gerichteter Krümmung ausgehend von einer Bordwandoberkante nach unten, wobei der horizontale Abstand zwischen den Schiebeführungen auf etwa halber Höhe der Bordwand eine Engstelle aufweist. Durch die Abstandsvergrößerung der Schiebeführungen unterhalb der Engstelle wird in der unteren Endlage des versenkten Daches die gewünschte Ablagestellung erzwungen, die stabil aufrechterhalten werden kann. Zur Arretierung der Dachschale in einer den Fahrgastraum abdeckenden Position sind ferner vordere Verschlüsse vorgesehen.

Ein weiteres bekanntes Hardtop-Fahrzeug (DE 4445580 C1) ist mit einer ein Dachteil und ein schwenkbeweglich mit diesem verbundenes Rückfensterteil aufweisenden Dachkonstruktion versehen, die mittels einer im Heckbereich der Fahrzeugkarosserie abgestützten und um eine fahrzeugfeste Heckschwenkachse schwenkbaren Zwangssteuerungseinrichtung in einen Verdeckkasten absenkbar ist. Die Zwangssteuerungseinrichtung weist ein Steuerungselement auf, das als ein an einem Führungsteil im Bereich der Dachschwenkachse mit einer Führungsstange und einer Hauptführungsstange angreifendes Lenkgestänge ausgebildet ist, welches mit einem mit einem Antriebsorgan verbundenen Schwenklenker ein gleichzeitig das Dachteil und das Rückfensterteil bewegendes Gelenkparallelogramm bildet. Befindet sich die Dachkonstruktion in ihrer im Verdeckkasten abgesenkten Öffnungsstellung, kann das vom Lenkgestänge gebildete Steuerungselement bis in eine stabile, eine Abstützung nach Art eines Kniehebels bildende Endstellung verschwenkt werden. Die in den Verdeckkasten des Fahrzeugs verbrachte Dachkonstruktion wird danach in ihrer Ablagestellung mit der Heckklappe verschlossen. In ihrer den Fahrgastraum abdeckenden Schließsstellung ist das Dachteil über Verbindungsglieder am Windschutzscheibenrahmen festgelegt.

Bei einer in der DE 196 34 511 C1 offenbarten beweglichen Dachkonstruktion mit einem formstabilen vorderen und einem ebensolchen hinteren Dachteil für einen offenen Personenkraftwagen ist ein doppelseitiges Parallelogrammgestänge vorgesehen, mittels dem das vordere Dachteil zwischen seiner geschlossenen und seiner geöffneten Position verlagerbar ist. Zwischen den beiden Parallelogrammlenkern auf jeder Seite des Parallelogrammgestänges ist ein Sperrmechanismus vorgesehen, der in der geschlossenen Position des Dachteils den jeweiligen hinteren Parallelogrammlenker mit dem benachbarten vorderen Parallelogrammlenker starr koppelt und eine Relativbewegung zwischen den beiden Parallelogrammlenkern und damit auch zwischen der vorderen und der hinteren Dachschale verhindert.

Ein gattungsgemäßes Fahrzeugdach mit einem vorderen Dachteil und einem Rückfensterteil ist aus der DE 195 07 431 C1 bekannt, welches in einer den Fondbereich abdeckenden Schließstellung über am vorderen Dachteil befindliche Verbindungsglieder am Windschutzscheibenrahmen abstützbar und nach einer Rückschwenkung zum Heckbereich des Fahrzeugs hin in einer Öffnungsstellung in einem heckseitigen Verdeckkasten ablegbar ist. Die am vorderen Dachteil vorgesehenen Verbindungsglieder wirken bei in den heckseitigen Verdeckkasten abgelegter Dachkonstruktion mit im Heckbereich des Fahrzeugs karosserieseitig angebrachten Arretierungsteilen paarweise zusammen und legen so die zusammengklappte Dachkonstruktion fest. Die mit den am vorderen Dachteil angebrachten Verbindungsgliedern zusammenwirkenden Arretierungsteile sowohl im Bereich des Windschutzscheibenrahmens als auch im Heckbereich sind im wesentlichen gleichwirkende Bauteile. Ein von einem Hydraulikzylinder gebildetes Antriebsorgan ermöglicht eine automatische Festlegung der Dachkonstruktion sowohl in der Schließstellung als auch in der Packstellung.

Davon ausgehend liegt der im Anspruch 1 angegebenen Erfindung die Aufgabe zugrunde, ein Fahrzeugdach der eingangs genannten Art zu schaffen, bei dem das absenkbare Dachteil ohne hohen konstruktiven Aufwand sicher in der angehobenen sowie in der abgesenkten Position arretiert werden kann und welches eine universelle Einsetzbarkeit ermöglicht.

Diese Aufgabe wird bei einem Fahrzeugdach mit den Merkmalen des Oberbegriffs des Anspruchs 1 dadurch gelöst, dass die Verschlussvorrichtung bei abgesenktem absenkbaren Dachteil mit einem zweiten Gegenlager zusammenwirkt, das an einem Element der Absenkmechanik festgelegt ist. Vorteilhafte Weiterbildungen der Erfindung sind Gegenstand der Unteransprüche.

Das absenkbare Dachteil wird in abgesenkter Position ohne Rückgriff auf karosserieseitige Elemente in einer raumsparenden Packstellung gehalten. Die Anzahl der Schnittstellen zwischen dem absenkbaren Dachteil und der Fahrzeugkarosserie werden reduziert, und es ergibt sich eine größere Freiheit bei der Plazierung und Gestaltung der Verschlussvorrichtung. Darüber hinaus ist es ohne großen Aufwand möglich, das absenkbare Dachteil bei Bedarf auch über eine vom Bediener betätigbare Koppelvorrichtung insgesamt lösbar mit der Karosserie zu verbinden, da bei auch bei abgenommenem Dachteil ein Zusammenhalt in kompakter Packstellung gewährleistet ist.

Bei dem zumindest zeitweise feststehenden Dachteil kann es sich um ein permanent feststehendes Dachteil wie zum Beispiel einen vorderen, oberhalb der Windschutzscheibe verlaufenden Querträger (Windschutzscheibenrahmen), um seitliche hintere Säulen (B- oder C-Säulen) oder einen hinteren, zwischen den seitlichen hinteren Säulen verlaufenden Querträger handeln. Darüber hinaus kann das zumindest zeitweise feststehende Dachteil selbst auch beweglich, beispielsweise absenkbar, ausgebildet sein, wie dies etwa bei absenkbaren, seitlichen hinteren Säulen der Fall ist. Das absenkbare Dachteil kann im Wesentlichen die gesamte Dachflächenkonstruktion bis zum Windschutzscheibenrahmen oder lediglich ein hinteres Dachteil umfassen, wobei in beiden Fällen das absenkbare Dachteil ferner ein Heckteil mit einer Heckscheibe sowie auch Seitenteile aufweisen kann.

So lässt sich der Bedienkomfort und die Bediensicherheit erhöhen, wenn die Verschlussvorrichtung von einer Hilfskraft-Betätigungsvorrichtung betätigbar ist. Die Hilfskraft-Betätigungsvorrichtung umfasst vorzugsweise einen Antriebsmotor oder einen Hydraulikzylinder.

In weiterer Ausgestaltung der Erfindung ist ein auch während der Fahrt öffnungsfähiges Dachteil vorgesehen, welches zumindest in seiner Öffnungsstellung vom absenkbaren Dachteil gelagert ist. Als öffnungsfähiges Dachteil kommt ein Faltdach, ein Lamellendach sowie ein Schiebe- oder Schiebe-Hebedach mit einem oder mehr als einem öffnungsfähigen Deckel an sich bekannter Ausgestaltung in Betracht. Infolge der Lagerung des öffnungsfähigen Dachteils zumindest in seiner Öffnungsstellung im oder am absenkbaren Dachteil lässt sich das öffnungsfähige Dachteil gemeinsam mit dem absenkbaren Dachteil absenken. Hierzu ist insbesondere vorgesehen, das öffnungsfähige Dachteil zumindest in seiner Öffnungsstellung mit Bezug auf das absenkbare Dachteil zu arretieren. Die Betätigung des öffnungsfähigen Dachteils lässt sich über eine Hilfskraft-Betätigungsvorrichtung realisieren, die in an sich bekannter Weise einen Antriebsmotor mit drucksteifen Kabeln zur Übertragung der Betätigungskräfte auf das öffnungsfähige Dachteil umfassen kann.

Insbesondere betätigt die Hilfskraft-Betätigungsvorrichtung sowohl die Verschlussvorrichtung als auch die Öffnungs- und Schließbewegung des öffnungsfähigen Dachteils.

Die Absenkmechanik lässt sich als Viergelenkanordnung ausbilden, die insbesondere einen ersten und einen zweiten Lenker umfasst, wobei die Lenker jeweils schwenkbar mit dem absenkbaren Dachteil und einem an der Fahrzeugkarosserie festgelegten Hauptlager verbunden sind. Dabei ist das zweite Gegenlager vorzugsweise an dem ersten Lenker der Viergelenkanordnung festgelegt und vorteilhaft etwa mittig zwischen den beiden Schwenkachsen des ersten Lenkers angeordnet.

Ist das zweite Gegenlager beweglich mit dem ersten Lenker der Viergelenkanordnung verbunden, kann das zweite Gegenlager mit Bezug auf die Verschlussvorrichtung eine Relativbewegung ausführen, wenn das absenkbare Dachteil in seiner abgesenkten Position arretiert wird. Dabei ist das zweite Gegenlager vorzugsweise schwenkbar mit dem ersten Lenker der Viergelenkanordnung verbunden, wobei die Schwenkachse des zweiten Gegenlagers im Wesentlichen parallel zu den Schwenkachsen verläuft, um die der erste Lenker der Viergelenkanordnung mit Bezug auf das absenkbare Dachteil und das Hauptlager schwenkbar ist.

Vorteilhafterweise ist das zweite Gegenlager mittels einer sich am ersten Lenker der Viergelenkanordnung abstützenden Vorspannfederanordnung in eine Ruhelage bringbar, die das zweite Gegenlager zumindest einnimmt, sofern es nicht mit der Verschlussvorrichtung zusammenwirkt. Insbesondere beim Zusammenwirken mit der Verschlussvorrichtung kann das zweite Gegenlager gegen die Wirkung der Vorspannfederanordnung von seiner Ruhelage in eine ausgelenkte Lage bringbar sein.

Das zweite Gegenlager kann in der ausgelenkten Lage an einem gummielastischen Anschlag anliegen, der zwischen dem zweiten Gegenlager und dem ersten Lenker der Viergelenkanordung vorgesehen ist. Dadurch ist nicht nur der Anschlag gedämpft, sondern es wird auch die Rückkehr des zweiten Gegenlagers in seine Ruhelage nach Lösen der Arretierung zwischen dem zweiten Gegenlager und der Verschlussvorrichtung unterstützt.

Um das Anhebens des absenkbaren Dachteils in seine angehobene Position zu unterstützen, kann an dem ersten und/oder dem zweiten Lenker der Viergelenkanordnung eine Federanordnung angelenkt sein, die sich an der Fahrzeugkarosserie abstützt, wobei auf das absenkbare Dachteil eine Federkraft in Richtung auf die angehobene Position aufbringbar ist, die wenigstens einen Teil der in Absenkrichtung wirkenden Gewichtskraftkomponente des absenkbaren Dachteils kompensiert. Die Federanordnung kann eine Gasdruckfeder, bei Bedarf in Kombination mit einem Dämpfer, umfassen.

Insbesondere bei manueller Betätigung der Anhebe- und Absenkbewegung des absenkbaren Dachteils ist die Federanordnung vorzugsweise dergestalt ausgebildet, dass die Federkraft im Wesentlichen nur zwischen der abgesenkten und einer vor Erreichen der angehobenen Position gelegenen Zwischenposition auf das absenkbare Dachteil wirkt. Nach Entriegeln des absenkbaren Dachteils vom zumindest zeitweise feststehenden Dachteil kann das absenkbare Dachteil einen im Wesentlichen kraftlosen Leerweg von seiner angehobenen Position bis zur Zwischenposition ausführen, von der es dann manuell in seine abgesenkte Position gebracht wird. Umgekehrt wird, ausgehend von der abgesenkten Position, nach dem Lösen der Arretierung das Anheben des absenkbaren Dachteils bis zum Erreichen der Zwischenposition von der Federanordnung unterstützt. Dabei ist die Größe der Federkraft vorteilhafterweise so gewählt, dass das absenkbare Dachteil von der Federanordnung in der Zwischenposition stabil gehalten wird.

Zur Realisierung eines Leerwegs im Wesentlichen ohne Kraftübertragung zwischen der Federanordnung und dem ersten oder zweiten Lenker im Bereich zwischen der angehobenen Position und der Zwischenposition des absenkbaren Dachteils kann die Federanordnung über eine schwenkbar mit dem ersten oder zweiten Lenker der Viergelenkanordnung verbundene Schwinge angelenkt sein, die zwischen der angehobenen Position und der Zwischenposition des absenkbaren Dachteils die Bewegung des absenkbaren Dachteils von der Betätigung der Federanordnung entkoppelt, wobei ab Erreichen der Zwischenposition das Verschwenken der Schwinge mit Bezug auf den Lenker blockiert ist. Insbesondere ist vorgesehen, die Schwinge mit dem ersten Lenker der Viergelenkanordnung an einer Stelle zu verbinden, die nahe an der Schwenkachse gelegen ist, um welche der erste Lenker mit Bezug auf das Hauptlager schwenkbar ist.

Die Federanordnung stützt sich karosserieseitig vorzugsweise an dem Hauptlager ab, so dass eine mittelbare Abstützung der Federanordnung mit Bezug auf die Fahrzeugkarosserie erfolgt.

Nachfolgend ist eine vorteilhafte Ausführungsform des Erfindungsgegenstandes anhand der Zeichnungen näher erläutert.

Es zeigt:
- Fig. 1: eine perspektivische Darstellung eines Fahrzeugs mit einem als Dachkassette ausgebildeten absenkbaren Dachteil in angehobener Position und einem Faltdach als öffnungsfähigem Dachteil, wobei das absenkbare Dachteil eine Verschlussvorrichtung umfasst, die mit einem ersten Gegenlager zusammenwirkt, welches an einem zumindest zeitweise feststehendem Dachteil in Form von hinteren seitlichen Säulen des Fahrzeugs festgelegt ist, so dass die Dachkassette in angehobener Position arretiert ist;
- Fig. 2: eine perspektivische Darstellung des Fahrzeugs der Fig. 1, wobei die Dachkassette das sich in Öffnungsstellung befindende Faltdach lagert und mitsamt diesem in eine abgesenkte Position gebracht sowie in dieser arretiert ist;
- Fig. 3: eine perspektivische Darstellung des Fahrzeugs der Fig. 1, bei dem aus Übersichtlichkeitsgründen von der Dachkassette lediglich ein Teil ihres Rahmens dargestellt ist, wobei eine die Anhebe- und Absenkbewegung der Dachkassette steuernde Absenkmechanik sowie ein Ausbau von Seitenholmen, die sich zwischen den hinteren seitlichen Säulen und einem vorderen, oberhalb der Windschutzscheibe verlaufenden Querträger erstrecken, schematisch veranschaulicht werden;
- Fig. 4A: die Seitenansicht in Richtung des Pfeils A der Fig. 3 auf die in Fahrtrichtung gesehen linke Absenkmechanik mitsamt der Dachkassette und einem die Absenkmechanik lagernden, an der Karosserie festgelegten Hauptlager, wobei die Dachkassette sich in angehobener Position befindet und ohne Faltdach wiedergegeben ist;
- Fig. 4B: die Seitenansicht in Richtung des Pfeils B der Fig. 3 auf die in Fig. 4A wiedergegebenen Bauteile, wobei die Dachkassette im Schnitt dargestellt ist;
- Fig. 5A: eine Seitenansicht entsprechend Fig. 4A, wobei die Dachkassette sich in einer Zwischenposition befindet;
- Fig. 5B: eine Seitenansicht entsprechend Fig. 4B mit sich in Zwischenposition befindender Dachkassette;
- Fig. 6A: eine Seitenansicht entsprechend Fig. 4A, wobei die Dachkassette sich in abgesenkter Position befindet; und
- Fig. 6B: eine Seitenansicht entsprechend Fig. 4B, bei der die Dachkassette sich in abgesenkter Position befindet.

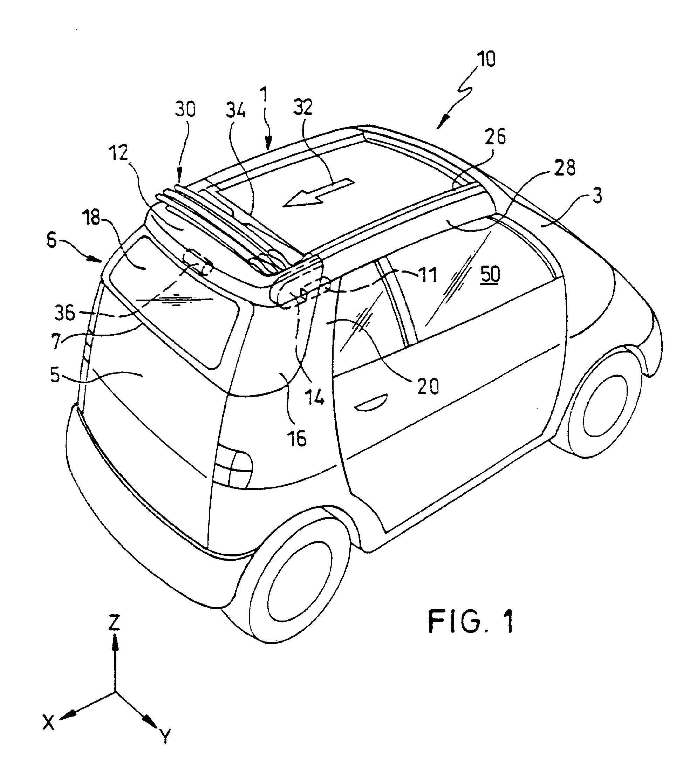

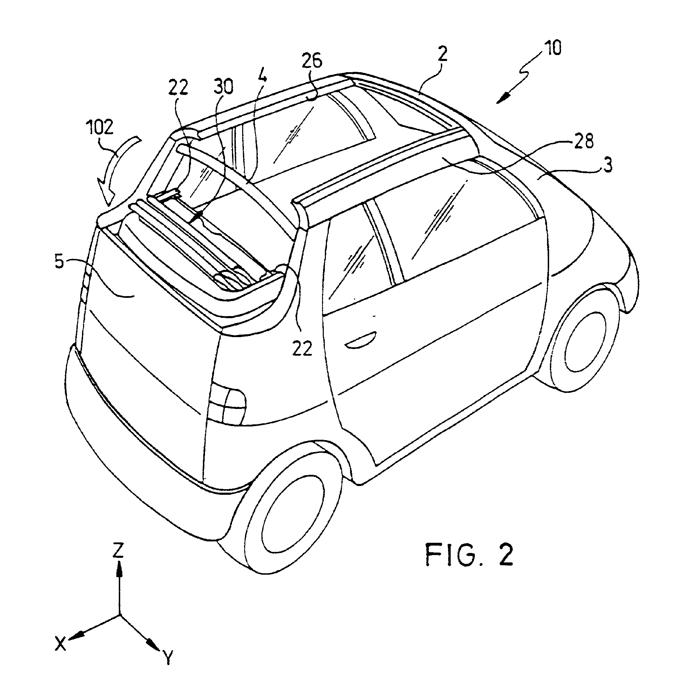

In den Fign. 1 bis 3 ist ein Fahrzeug 10 mit einem Fahrzeugdach 1 gezeigt, wobei das Fahrzeugdach 1 ein von einem Antriebsmotor 36 betätigbares Faltdach 30 als öffnungsfähiges Dachteil, ein als Dachkassette 12 ausgebildetes absenkbares Dachteil, ein Heckteil 6 sowie Seitenholme 28 umfasst, die sich zwischen hinteren seitlichen Säulen des Fahrzeugs 10 (B-Säulen 20) und einem vorderen, oberhalb der Windschutzscheibe verlaufenden Querträger 2 erstrecken. Das Faltdach 30 ist auf der in Fahrtrichtung gesehen linken sowie rechten Seite jeweils in zwei Führungsschienenabschnitten verschiebbar gelagert, von denen ein hinterer Führungsschienenabschnitt 22 in der Dachkassette 12 und ein vorderer Führungsschienenabschnitt 26 in dem Seitenholm 28 angeordnet ist. Mittels des Antriebsmotors 36 ist das Faltdach 30 über nicht gezeigte drucksteife Kabel in bzw. entgegen seiner Öffnungsrichtung 32 verschiebbar und kann in beliebige Zwischenstellungen zwischen seiner Öffnungsstellung (vgl. Fign. 1 und 2) und seiner Schließstellung gebracht werden. In Öffnungsstellung ist das Faltdach 30 in der Dachkassette 12 gelagert, wobei alle in den Führungsschienenabschnitten 22 und 26 verschiebbaren Teile des Faltdachs 30 in dem hinteren Führungsschienenabschnitt 22 in der Dachkassette 12 aufgenommen und mit Bezug auf die Dachkassette 12 arretierbar sind. Dabei ist das Faltdach 30 in Öffnungsstellung soweit nach hinten in Öffnungsrichtung 32 verschoben, dass seine Dachspitze 34 im Wesentlichen bündig mit einer Vorderkante der Dachkassette 12 abschließt.

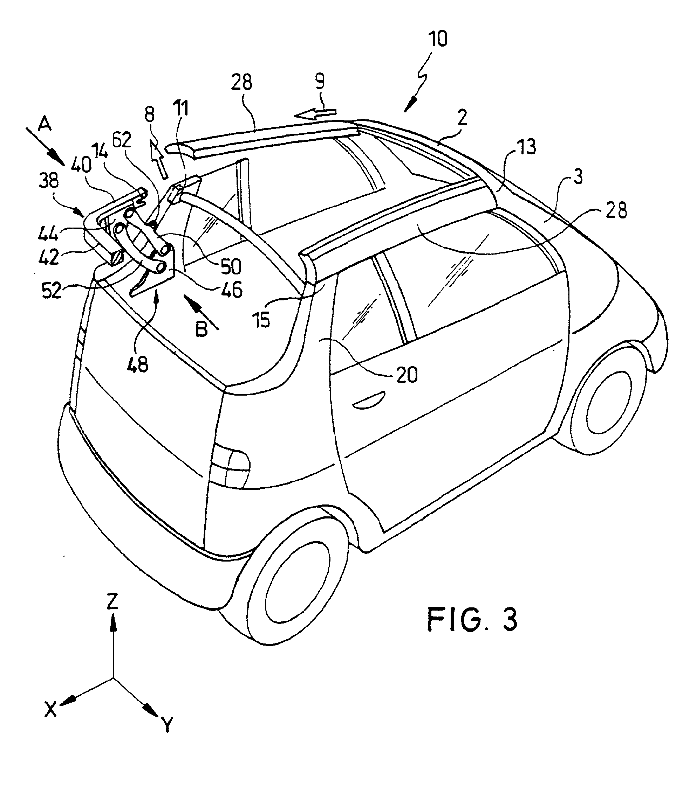

Die Seitenholme 28 sind lösbar mit dem Fahrzeug 10 verbunden, wozu im Bereich der Stoßstelle zwischen dem vorderen, oberhalb der Windschutzscheibe verlaufenden Querträger 2 und vorderen seitlichen Säulen (A-Säulen 3) vordere Seitenholmlager 13 sowie im Bereich des oberen Endes der hinteren seitlichen Säulen (B-Säulen 20) hintere Seitenholmlager 15 vorgesehen sind. Zum Ausbau der Seitenholme 28 werden, wie der Fig. 3 zu entnehmen ist, zunächst die hinteren Seitenholmlager 15 entriegelt, die Seitenholme 28 an ihrem hinteren Ende in Richtung des Pfeils 8 angehoben und dann in Richtung des Pfeils 9 nach hinten aus den vorderen Seitenholmlagern 13 herausgezogen. Die ausgebauten Seitenholme 28 lassen sich im Fahrzeug 10 in entsprechenden Aufnahmevorrichtungen, beispielsweise in einer Hecktür 5, ablegen. Zwischen den starr mit der Fahrzeugkarosserie verbundenen B-Säulen 20 kann sich in der Art eines Überrollbügels ein hinterer Querträger 4 erstrecken.

Die in der Dachkassette 12 angeordneten hinteren Führungsschienenabschnitte 22 sind an insgesamt mit 14 bezeichneten Verschlussvorrichtungen angebracht, welche ihrerseits an der Dachkassette 12 festgelegt sind. Je eine Verschlussvorrichtung 14 ist symmetrisch zu einer in Fahrzeuglängsrichtung verlaufenden Symmetrieachse im Inneren der Dachkassette 12 an der in Fahrtrichtung linken und rechten Seite der Dachkassette 12 angebracht und wirkt mit einem ersten Gegenlager 11 zusammen, welches nahe einem oberen Ende jeder der B-Säulen 20 festgelegt ist, um eine Verriegelung und Entriegelung der Dachkassette 12 mit Bezug auf die B-Säulen 20 zu ermöglichen, wenn die Dachkassette 12 sich in angehobener Position befindet. Die Dachkassette 12 ist über eine weiter unten im Detail beschriebene, als Viergelenkanordnung 48 ausgebildete Absenkmechanik mit Bezug auf die Fahrzeugkarosserie bewegungsgesteuert und kann nach Lösen der Arretierung zwischen der Verschlussvorrichtung 14 und dem an den B-Säulen 20 vorgesehenen ersten Gegenlager 11 in eine abgesenkte Position gebracht werden, in der eine Oberseite der Dachkassette 12 im Wesentlichen auf der Höhe der Fahrzeuggürtellinie zu liegen kommt. Um die Dachkassette 12 in abgesenkter Position zu arretieren, ist an der Viergelenkanordnung 48 selbst ein insgesamt mit 62 bezeichnetes zweites Gegenlager vorgesehen, mit dem die Verschlussvorrichtung 14 in ähnlicher Weise wie mit dem ersten Gegenlager 11 wechselwirkt.

Die Dachkassette 12 umfasst einen als Kunststoffformteil ausgebildeten U-förmigen Rahmen 38 mit seitlichen, im Wesentlichen in Fahrtrichtung verlaufenden kurzen Schenkeln 40 und einem hinteren, im Wesentlichen quer zur Fahrtrichtung angeordneten langen Schenkel 42. Am Rahmen 38 der Dachkassette 12 ist das Heckteil 6 des Fahrzeugdachs 1 festgelegt, welches eine Heckscheibe 18 aus faltbarem Kunststoffmaterial sowie ebenfalls faltbare Seitenteile 16 umfasst. Eine Unterseite 7 des Heckteils 6 ist an die Hecktür 5 anlegbar und kann nach oben geklappt werden, um den Zugang zu einem im Fahrzeugheck gelegenen Stauraum zu verbessern. Die Hecktür 5 ihrerseits ist mit ihrer Unterseite schwenkbar mit der Fahrzeugkarosserie verbunden und kann unabhängig von der Position, welche die Unterseite 7 des Heckteils 6 einnimmt sowie auch bei abgesenkter Dachkassette 12 nach hinten geklappt werden. Zur Erhöhung der Stabilität des Heckteils und zur Anbringung einer Schlossfalle für die Hecktür 5 kann an der Unterseite 7 des Heckteils 6 ein Querträger angeordnet sein.

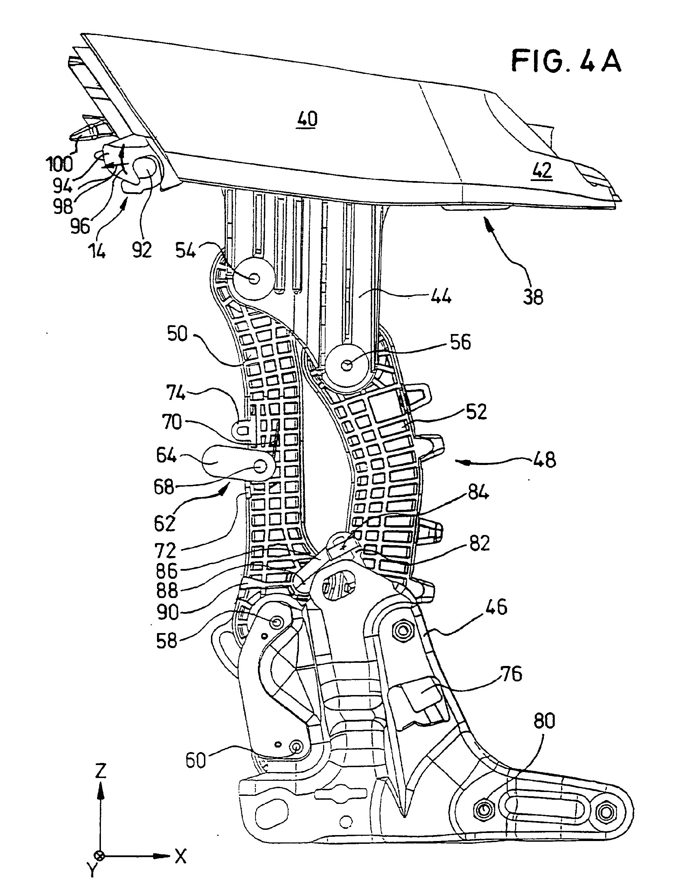

In den Fign. 4A, 4B, 5A, 5B, 6A und 6B sind die in Fahrtrichtung gesehen linke Viergelenkanordnung 48 sowie ein linkes Hauptlager 46, über welches die Viergelenkanordnung 48 mit der Fahrzeugkarosserie verbunden ist, im Detail gezeigt, wobei die entsprechenden rechten Bauteile spiegelbildlich ausgeführt sind. Die Viergelenkanordnung 48 umfasst einen ersten Lenker 50 sowie einen zweiten Lenker 52, die jeweils über ein Schwenklager 54 bzw. 56 an einem einstückig mit dem Schenkel 40 des Dachkassettenrahmens 38 ausgebildeten Lagerbock 44 verbunden sind. Ausgehend von den Schwenklagern 54 und 56 erstrecken sich der erste und der zweite Lenker 50 bzw. 52 der Viergelenkanordnung 48 bis zu Schwenklagern 58 und 60, wobei der erste Lenker 50 mittels des Schwenklagers 58 und der zweite Lenker 52 mittels des Schwenklagers 60 an dem Hauptlager 46 angelenkt ist. Das Hauptlager 46 seinerseits ist an der Fahrzeugkarosserie im Bereich des innenliegenden unteren Endes der B-Säule 20 über mechanische Verbindungsglieder festgelegt, wie dies in Fig. 3 veranschaulicht ist.

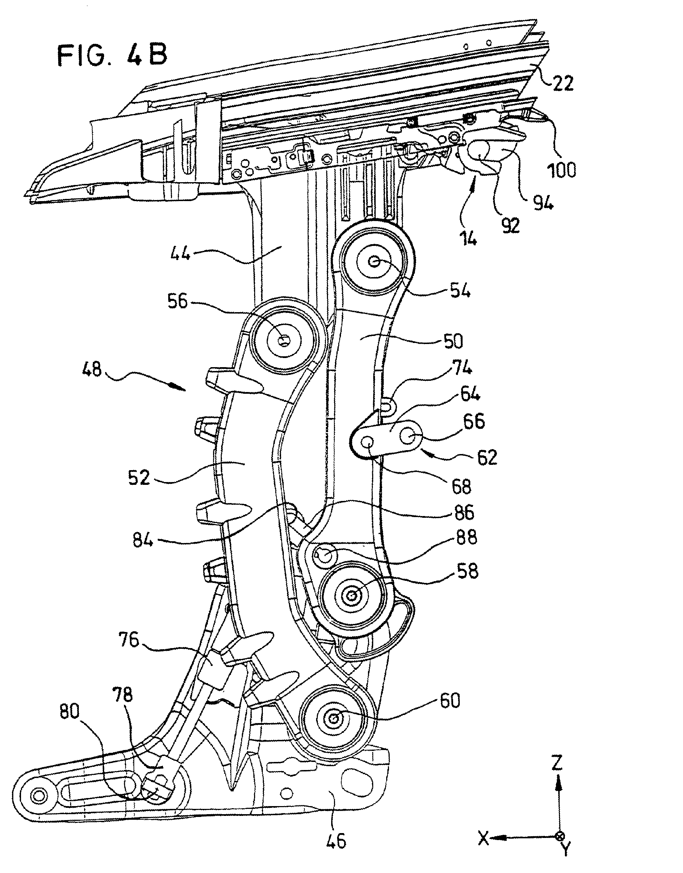

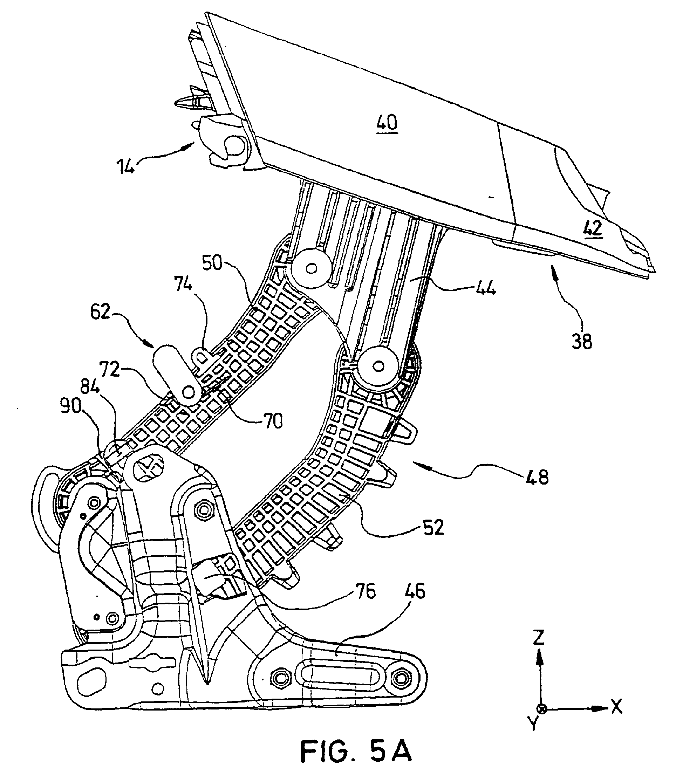

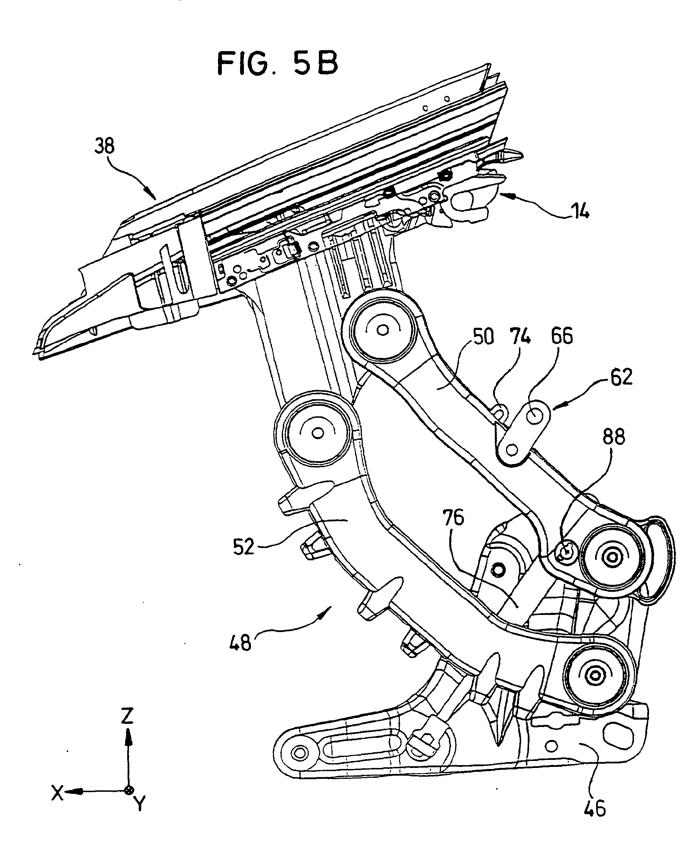

An dem ersten Lenker 50, welcher ebenso wie der zweite Lenker 52 als Kunststoffformteil ausgebildet ist, ist etwa mittig zwischen den beiden Schwenklagern 54 und 58 das zweite Gegenlager 62 mittels eines Schwenklagers 68 schwenkbar angebracht. Das zweite Gegenlager 62 umfasst einen Schwenkarm 64 sowie einen Bolzen 66, der an einem dem Schwenklager 68 abgewandten Ende des Schwenkarms 64 angeordnet ist, und wirkt auf die weiter unten beschriebene Weise mit der Verschlussvorrichtung 14 zusammen. In seiner in den Fign. 4A, 4B, 5A und 5B gezeigten Ruhelage steht der Schwenkarm 64 im Wesentlichen senkrecht mit Bezug auf den ersten Lenker 50, wobei das den Bolzen 66 tragende Ende des Schwenkarms 64 eine dem zweiten Lenker 52 abgewandte Außenkontur des ersten Lenkers 50 überragt. In dieser Ruhelage liegt der Schwenkarm 64 des zweiten Gegenlagers 62 mittels einer Biegefeder 70 federnd vorgespannt an einem festen Anschlag 72 an, der einstückig mit dem ersten Lenker 50 ausgebildet ist. Auf der dem festen Anschlag 72 abgewandten Seite des Schwenkarms 64 ist ein Gummielement 74 als gummielastischer Anschlag am ersten Lenker 50 an einer Position festgelegt, die so gewählt ist, dass das zweite Gegenlager 62, sofern es bei Wechselwirkung mit der Verschlussvorrichtung 14 gegen die Wirkung der Biegefeder 70 verschwenkt wird, an dem Gummielement 74 zum Anliegen kommt.

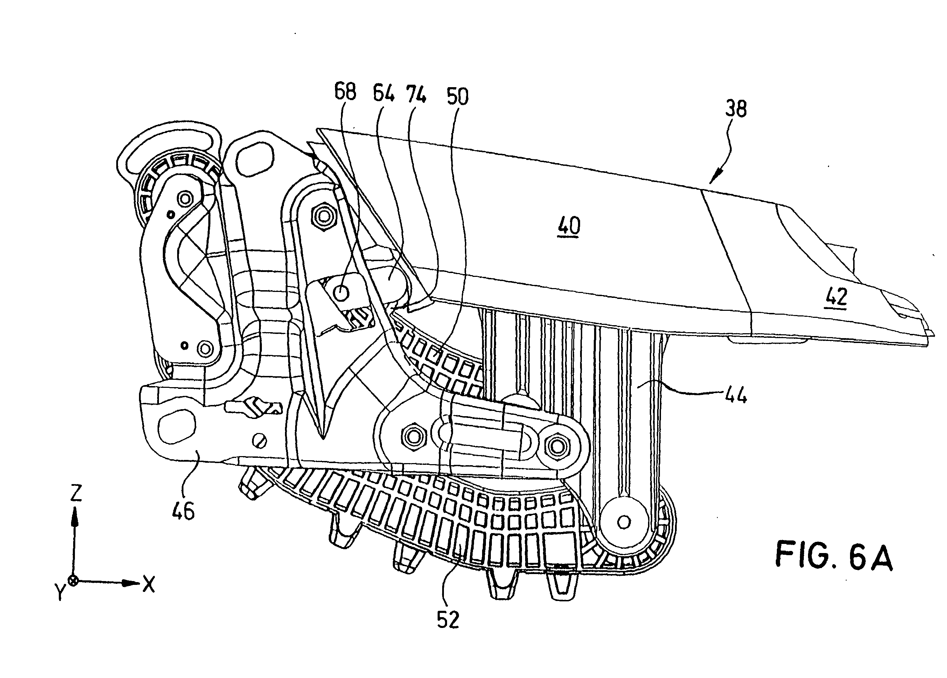

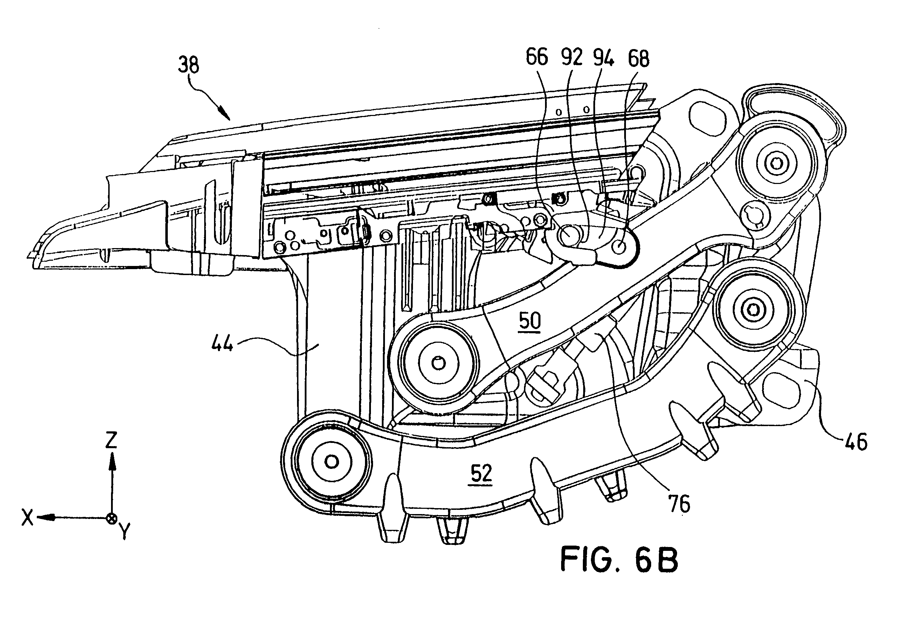

Über ein dem Schwenklager 58 benachbartes Schwenklager 88 ist am ersten Lenker 50 der Viergelenkanordnung 48 ein erstes Ende einer Schwinge 86 angelenkt, mit deren zweitem Ende über ein Koppelglied 82 ein Zylinder einer Gasdruckfeder 76 verbunden ist. Eine Kolbenstange der Gasdruckfeder 76 stützt sich mittels eines Koppelglieds 78 an dem Hauptlager 46 schwenkbeweglich ab, wobei zwischen dem Koppelglied 78 und dem Hauptlager 46 ein Schwenklager 80 vorgesehen ist. Die Achsen der der Gasdruckfeder 76 sowie der Schwinge 86 zugeordneten Schwenklager 80, 84 und 88 verlaufen im Wesentlichen parallel zu den Achsen der den Lenkern 50 und 52 zugeordneten Schwenklager 54, 56, 58 und 60. Das Gleiche gilt auch für die Achse des Schwenklagers 68, um welche das zweite Gegenlager 62 mit Bezug auf den ersten Lenker 50 schwenkbar ist. In der angehobenen Position der Dachkassette 12 gemäß den Fign. 4A und 4B befindet sich die Gasdruckfeder 76 in vollständig ausgefahrener Stellung, und die Schwinge 86 überragt mit ihrem das Schwenklager 84 tragenden Ende die Außenkontur des ersten Lenkers 50 auf der dem zweiten Lenker 52 zugewandten Seite des ersten Lenkers 50. Beim Absenken der Dachkassette 12 von der angehobenen Position in die Zwischenposition gemäß den Fign. 5A und 5B kann die Schwinge 86 im Wesentlichen frei, d.h., im Wesentlichen ohne Kraftübertragung auf den ersten Lenker 50, um die Schwenkachse 88 verschwenkt werden, bis die Schwinge 86 an einem Anschlag 90 anliegt, welcher einstückig am ersten Lenker 50 angeformt ist und ein weiteres Verschwenken der Schwinge 86 mit Bezug auf den ersten Lenker 50 verhindert. Die Zwischenposition der Dachkassette 12 ist erreicht, wenn bei im Wesentlichen vollständig ausgefahrener Gasdruckfeder 76 die Schwinge 86 am Anschlag 90 anliegt. In dieser Position wird die Dachkassette 12 durch die auf den ersten Lenker 50 von der Gasfruckfeder 76 ausgeübte Kraft stabil gehalten und kann manuell gegen die Wirkung der Kraft der Gasdruckfeder in die abgesenkte Position gebracht werden, die in den Fign. 6A und 6B wiedergegeben ist.

Die Verschlussvorrichtung 14, hinsichtlich deren detaillierterer Beschreibung auf zwei gleichlaufend eingereichte Patentanmeldungen der Anmelderin verwiesen wird, die beide den Titel "Verschlussvorrichtung" tragen, umfasst einen in und entgegegen der Richtung des Pfeils 98 verschiebbaren sowie in und entgegen der Richtung des Pfeils 96 schwenkbaren Verriegelungshaken 94 (vgl. Fig. 4A), dessen Bewegung vorzugsweise mittels motorischer Betätigung durch den Antriebsmotor 36 erfolgt, sowie eine U-förmige Aufnahmenut 92, die bei angehobener Dachkassette 12 im Wesentlichen in -X-Richtung geöffnet ist. Um die Dachkassette 12 in angehobener Position mit Bezug auf die B-Säulen 20 festzulegen, wird die Dachkassette 12 ausgehend von der Zwischenposition manuell in die angehobene Position gebracht, wobei sich die Dachkassette 12 gemäß der von der Viergelenkanordnung 48 vorgegebenen Kinematik den B-Säulen 20 nähert und ein Bolzen, der Teil des ersten Gegenlagers 11 ist, in die Aufnahmenut 92 der Verschlussvorrichtung 14 eingeführt wird. Dazu wird der Verriegelungshaken 94, der sich in den Fign. 4A, 4B, 5A und 5B in seiner vorderen Rastposition in einer Verriegelungsstellung befindet, in Richtung des Pfeils 96 nach oben geschwenkt, wobei er von der Verriegelungs- in eine Freigabestellung gelangt, in welcher letzterer der Bolzen des ersten Gegenlagers 11 in die Aufnahmenut 92 gelangen kann. Bei aufgenommenem Bolzen kann der Verriegelungshaken 94 entgegen der Richtung des Pfeils 96 zurück in seine Verriegelungsstellung geschwenkt und entgegen der Richtung des Pfeils 98 von seiner vorderen in seine hintere Rastposition verschoben werden, wobei der Bolzen des ersten Gegenlagers 11 in X-Richtung tiefer in die Aufnahmenut gelangt und Dichtungselemente, die zur Abdichtung der Dachkassette 12 zum Fahrzeuginnenraum hin vorgesehen sind, mit vorbestimmtem Anpressdruck beaufschlagt werden. Die Führungsschienenabschnitte 22 und 26 werden beim Ankoppelvorgang der Dachkassette 12 an den B-Säulen 20 durch Zentriermittel, welche ein Zentrierorgan 100 umfassen, in Fluchtung gebracht und mit Bezug aufeinander ausgerichtet, wie dies im Detail in einer gleichlaufend von der Anmelderin eingereichten Patentanmeldung mit dem Titel "Führungsschiene" beschrieben ist. Sobald der Ankoppelvorgang abgeschlossen ist, kann die Arretierung der verschiebbar in dem hinteren Führungsschienenabschnitt 22 aufgenommenen Teile des Faltdachs 30 mit Bezug auf den hinteren Führungsschienenabschnitt 22 aufgehoben und das Faltdach 30 von seiner Öffnungsstellung in Richtung auf seine Schließstellung, d.h., entgegen der Richtung des Pfeils 32 (siehe Fig. 1), verschoben werden.

Um die Dachkassette 12 von dem an beiden B-Säulen 20 vorgesehenen ersten Gegenlager 11 abzukoppeln, wird zunächst das Faltdach 30 in seine Öffnungsstellung gebracht, in der sämtliche in den Führungsschienenabschnitten 22 und 26 verschiebbar aufgenommenen Teile des Faltdachs 30 sich vollständig in dem hinteren Führungsschienenabschnitt 22 befinden, und das Faltdach 30 wird mit Bezug auf den hinteren Führungsschienenabschnitt 22 arretiert. Der Verriegelungshaken 94 wird in Richtung des Pfeils 98 von seiner hinteren Rastposition in seine vordere Rastposition verschoben und in Richtung des Pfeils 96 nach oben in die Freigabestellung angehoben, so dass der Bolzen des ersten Gegenlagers 11 aus der Aufnahmenut 92 der Verschlussvorrichtung 14 freikommt. Die Dachkassette 12 kann nun in ihre Zwischenposition gebracht werden, in der sie von der Gasdruckfeder 76 gehalten wird. Gegen die Wirkung der Gasdruckfeder 76 wird die Dachkassette 12 manuell in Richtung des Pfeils 102 (vgl. Fig. 2) von der Zwischenposition gemäß den Fign. 5A und 5B in die abgesenkte Position übergehführt, welche in den Fign. 6A und 6B wiedergegeben ist. Kurz vor Erreichen der abgesenkten Position wirkt das zweite Gegenlager 62 mit der Verschlussvorrichtung 14 in der Weise zusammen, dass der Bolzen 66 des zweiten Gegenlagers 62 in die Aufnahmenut 92 der Verschlussvorrichtung 14 eingeführt wird. Dazu kann entweder vorgesehen sein, dass der Verriegelungshaken 94 zunächst in seiner Freigabestellung gehalten wird und durch Wechselwirkung mit dem zweiten Gegenlager 62, insbesondere mit dem Bolzen 66, von seiner Freigabestellung freikommt und in die den Bolzen 66 arretierende Verriegelungsstellung gelangt, oder der Verriegelungshaken 94 befindet sich zunächst federnd vorgespannt in seiner Verriegelungsstellung und wird durch Wechselwirkung mit dem Bolzen 66 in Richtung des Pfeils 96 angehoben, wobei der Verriegelungshaken 94 wieder in seine Verriegelungsstellung zurückkehrt, sobald der Bolzen 66 ausreichend weit in die Aufnahmenut 92 eingeführt ist, um vom Verriegelungshaken 94 in dessen vorderer Rastposition arretiert werden zu können. Der Verriegelungshaken 94 kann nun den Bolzen 66 entgegen der Richtung des Pfeils 98 tiefer in die Aufnahmenut 92 hineinziehen, wobei der Schwenkarm 64 des zweiten Gegenlagers 62 gegen die Wirkung der Biegefeder 70 um die Achse des Schwenklagers 68 verschwenkt wird und das zweite Gegenlager 62 an dem Gummielement 74 zur Anlage gelangt. Damit ist die Dachkassette 12 in abgesenkter Position stabil gehalten und nimmt eine kompakte Packlage ein.

### Bezugszeichenliste

- 1: Fahrzeugdach
- 2: vorderer Querträger
- 3: A-Säule
- 4: hinterer Querträger
- 5: Hecktür
- 6: Heckteil
- 7: Unterseite (von 6)
- 8, 9: Pfeil
- 10: Fahrzeug
- 11: erstes Gegenlager
- 12: Dachkassette
- 13: vorderes Seitenholmlager
- 14: Verschlussvorrichtung
- 15: hinteres Seitenholmlager
- 16: Seitenteil
- 18: Heckscheibe
- 20: B-Säule
- 22: hinterer Führungsschienenabschnitt
- 26: vorderer Führungsschienenabschitt
- 28: Seitenholm
- 30: Faltdach
- 32: Öffnungsrichtung
- 34: Dachspitze
- 36: Antriebsmotor
- 38: Rahmen (von 12)
- 40, 42: Schenkel (von 38)
- 44: Lagerbock
- 46: Hauptlager
- 48: Viergelenkanordnung
- 50: erster Lenker (von 48)
- 52: zweiter Lenker (von 48)
- 54, 56, 58, 60: Schwenklager
- 62: zweites Gegenlager
- 64: Schwenkarm
- 66: Bolzen
- 68: Schwenklager (von 62)
- 70: Biegefeder
- 72: fester Anschlag
- 74: Gummielement
- 76: Gasdruckfeder
- 78: Koppelglied
- 80: Schwenklager
- 82: Koppelglied
- 84: Schwenklager
- 86: Schwinge
- 88: Schwenklager
- 90: Anschlag
- 92: Aufnahmenut
- 94: Verriegelungshaken
- 96, 98: Pfeil
- 100: Zentrierorgan
- 102: Pfeil

## Patentansprüche

1. Fahrzeugdach mit einem über eine Absenkmechanik (48) von einer angehobenen in eine abgesenkte Position bringbaren absenkbaren Dachteil (12), welches eine Verschlussvorrichtung (14) umfasst, mittels der das absenkbare Dachteil sowohl in angehobener als auch in abgesenkter Position arretierbar ist, wobei die Verschlussvorrichtung (14) bei angehobenem absenkbaren Dachteil mit einem ersten Gegenlager (11) zusammenwirkt, das an einem zumindest zeitweise feststehenden Dachteil ( 20) festgelegt ist, **dadurch gekennzeichnet, dass** die Verschlussvorrichtung (14) bei abgesenktem absenkbaren Dachteil ( 12) mit einem zweiten Gegenlager (62) zusammenwirkt, das an einem Element der Absenkmechanik (48) festgelegt ist.

2. Fahrzeugdach nach Anspruch 1, **dadurch gekennzeichnet, dass** die Verschlussvorrichtung (14) von einer Hilfskraft-Betätigungsvorrichtung 36) betätigbar ist.

3. Fahrzeugdach nach Anspruch 1 oder 2, **gekennzeichnet durch** wenigstens ein auch während der Fahrt öffnungsfähiges Dachteil (30), welches zumindest in seiner Öffnungsstellung vom absenkbaren Dachteil (12) gelagert ist.

4. Fahrzeugdach nach Anspruch 2 und 3, **dadurch gekennzeichnet, dass** die Hilfskraft-Betätigungsvorrichtung (36) sowohl die Verschlussvorrichtung (14) als auch das öffnungsfähige Dachteil (30) betätigt.

5. Fahrzeugdach nach einem der vorhergehenden Ansprüche, **dadurch gekennzeichnet, dass** die Absenkmechanik als Viergelenkanordnung (48) ausgebildet ist.

6. Fahrzeugdach nach Anspruch 5, **dadurch gekennzeichnet, dass** die Viergelenkanordnung (48) einen ersten (50) und einen zweiten (52) Lenker umfasst, die jeweils schwenkbar mit dem absenkbaren Dachteil (12) und einem an der Fahrzeugkarosserie festgelegten Hauptlager (46) verbunden sind.

7. Fahrzeugdach nach Anspruch 6, **dadurch gekennzeichnet, dass** das zweite Gegenlager (62) an dem ersten Lenker (50) der Viergelenkanordnung (48) festgelegt ist.

8. Fahrzeugdach nach Anspruch 7, **dadurch gekennzeichnet, dass** das zweite Gegenlager (62) beweglich mit dem ersten Lenker (50) der Viergelenkanordnung (48) verbunden ist.

9. Fahrzeugdach nach Anspruch 8, **dadurch gekennzeichnet, dass** das zweite Gegenlager (62) schwenkbar mit dem ersten Lenker (50) der Viergelenkanordnung (48) verbunden ist, wobei die Schwenkachse des zweiten Gegenlagers (62) im Wesentlichen parallel zu den Schwenkachsen verläuft, um die der erste Lenker (50) der Viergelenkanordnung (48) mit Bezug auf das absenkbare Dachteil (12) und das Hauptlager (46) schwenkbar ist.

10. Fahrzeugdach nach Anspruch 8 oder 9, **dadurch gekennzeichnet, dass** das zweite Gegenlager (62) mittels einer sich am ersten Lenker (50) der Viergelenkanordnung (48) abstützenden Vorspannfederanordnung ( 70) in eine Ruhelage bringbar ist, die das zweite Gegenlager (62) zumindest einnimmt, sofern es nicht mit der Verschlussvorrichtung (14) zusammenwirkt.

11. Fahrzeugdach nach Anspruch 10, **dadurch gekennzeichnet, dass** das zweite Gegenlager (62) beim Zusammenwirken mit der Verschlussvorrichtung (14) gegen die Wirkung der Vorspannfederanordnung (70) von seiner Ruhelage in eine ausgelenkte Lage bringbar ist.

12. Fahrzeugdach nach Anspruch 11, **dadurch gekennzeichnet, dass** das zweite Gegenlager (62) in der ausgelenkten Lage an einem gummielastischen Anschlag (74) anliegt, der zwischen dem zweiten Gegenlager (62) und dem ersten Lenker (50) der Viergelenkanordung (48) vorgesehen ist.

13. Fahrzeugdach nach einem der Ansprüche 6 bis 12, **dadurch gekennzeichnet, dass** an dem ersten (50) und/oder dem zweiten (52) Lenker der Viergelenkanordnung (48) eine sich an der Fahrzeugkarosserie abstützende Federanordnung (76) angelenkt ist, wobei auf das absenkbare Dachteil (Kassette 12) eine Federkraft in Richtung auf die angehobene Position aufbringbar ist, die wenigstens einen Teil der in Absenkrichtung wirkenden Gewichtskraftkomponente des absenkbaren Dachteils kompensiert.

14. Fahrzeugdach nach Anspruch 13, **dadurch gekennzeichnet, dass** die Federanordnung (76) dergestalt ausgebildet ist, dass die Federkraft im Wesentlichen nur zwischen der abgesenkten und einer vor Erreichen der angehobenen Position gelegenen Zwischenposition auf das absenkbare Dachteil (12) wirkt.

15. Fahrzeugdach nach Anspruch 14, **dadurch gekennzeichnet, dass** die Federanordnung (76) über eine schwenkbar mit dem ersten (50) oder zweiten (52) Lenker der Viergelenkanordnung (48) verbundene Schwinge (86) angelenkt ist, die zwischen der angehobenen Position und der Zwischenposition des absenkbaren Dachteils (12) die Bewegung des absenkbaren Dachteils von der Betätigung der Federanordnung ( 76) entkoppelt, wobei ab Erreichen der Zwischenposition das Verschwenken der Schwinge (86) mit Bezug auf den Lenker (50 bzw. 52) blockiert ist.

16. Fahrzeugdach nach einem der Ansprüche 13 bis 15, **dadurch gekennzeichnet, dass** die Federanordnung (76) sich karosserieseitig an dem Hauptlager (46) abstützt.

## Claims

1. Vehicle roof having a roof part (12) which can be lowered and which can be moved by a lowering mechanism (48) from a raised into a lowered position and which comprises a locking device (14), by means of which the roof part that can be lowered can be locked both in the raised and in the lowered position, the locking device (14), when the roof part that can be lowered is raised, interacting with a first pivot support (11) which is fixed to an at least temporarily stationary roof part (20), **characterized in that**, when the roof part (12) that can be lowered is lowered, the locking device (14) interacts with a second pivot support (62) which is fixed to an element of the lowering mechanism (48).

2. Vehicle roof according to Claim 1, **characterized in that** the locking device (14) can be actuated by an auxiliary force actuating device (36).

3. Vehicle roof according to Claim 1 or 2, **characterized by** at least one roof part (30) which can be opened even when travelling and which, at least in its open position, is supported by the roof part (12) that can be lowered.

4. Vehicle roof according to Claim 2 and 3, **characterized in that** the auxiliary force actuating device (36) actuates both the locking device (14) and the roof part (30) that can be opened.

5. Vehicle roof according to one of the preceding claims, **characterized in that** the lowering mechanism is constructed as a four-bar arrangement (48).

6. Vehicle roof according to Claim 5, **characterized in that** the four-bar arrangement (48) comprises a first link (50) and a second link (52) which are in each case pivotably connected to the roof part (12) that can be lowered and a main bearing (46) fixed to the vehicle bodywork.

7. Vehicle roof according to Claim 6, **characterized in that** the second pivot support (62) is fixed to the first link (50) of the four-bar arrangement (48).

8. Vehicle roof according to Claim 7, **characterized in that** the second pivot support (62) is connected to the first link (50) of the four-bar arrangement (48) such that it can move.

9. Vehicle roof according to Claim 8, **characterized in that** the second pivot support (62) is pivotably connected to the first link (50) of the four-bar arrangement (48), the pivot axis of the second pivot support (62) running substantially parallel to the pivot axes about which the first link (50) of the four-bar arrangement (48) can be pivoted with reference to the roof part (12) that can be lowered and the main bearing (46).

10. Vehicle roof according to Claim 8 or 9, **characterized in that** the second pivot support (62) can be moved, by means of a prestressed spring arrangement (70) supported on the first link (50) of the four-bar arrangement (48), into a rest position assumed by the second pivot support (62), at least when it is not interacting with the locking device (14).

11. Vehicle roof according to Claim 10, **characterized in that** the second pivot support (62) can be moved from its rest position into a deflected position, counter to the action of the prestressed spring arrangement (70) as it interacts with the locking device (14).

12. Vehicle roof according to Claim 11, **characterized in that**, in the deflected position, the second pivot support (62) rests on a resilient stop (74), which is provided between the second pivot support (62) and the first link (50) of the four-bar arrangement (48).

13. Vehicle roof according to one of Claims 6 to 12, **characterized in that** a spring arrangement (76) that is supported on the vehicle bodywork is attached to the first (50) and/or the second (52) link of the four-bar arrangement (48), it being possible for a spring force in the direction of the raised position to be applied to the roof part (cassette 12) that can be lowered, compensating for at least part of the component of the weight of the roof part that can be lowered which acts in the lowering direction.

14. Vehicle roof according to Claim 13, **characterized in that** the spring arrangement (76) is constructed in such a way that the spring force acts on the roof part (12) that can be lowered substantially only between the lowered position and an intermediate position before reaching the raised position.

15. Vehicle roof according to Claim 14, **characterized in that** the spring arrangement (76) is attached via a rocker arm (86) which is pivotably connected to the first (50) or second (52) link of the four-bar arrangement (48), and which, between the raised position and the intermediate position of the roof part (12) that can be lowered, uncouples the movement of the roof part that can be lowered from the actuation of the spring arrangement (76), the pivoting of the rocker arm (86) in relation to the link (50 or 52) being blocked from a point at which the intermediate position is reached.

16. Vehicle roof according to one of Claims 13 to 15, **characterized in that**, on the bodywork side, the spring arrangement (76) is supported on the main bearing (46).

## Revendications

1. Toit de véhicule comportant une partie de pavillon abaissable (12) qui peut être amenée, par l'intermédiaire d'un mécanisme abaisseur (48), d'une position soulevée à une position abaissée, et qui renferme un dispositif de fermeture (14) au moyen duquel la partie de pavillon abaissable peut être arrêtée tant en position soulevée qu'en position abaissée, ledit dispositif de fermeture (14) coopérant, lorsque la partie de pavillon abaissable est soulevée, avec une première contre-butée (11) consignée à demeure sur une partie de pavillon (20) occupant au moins temporairement une position fixe, **caractérisé par le fait que** le dispositif de fermeture (14) coopère, lorsque la partie de pavillon abaissable (12) est abaissée, avec une seconde contre-butée (62) consignée à demeure sur un élément du mécanisme abaisseur (48).

2. Toit de véhicule, selon la revendication 1, **caractérisé par le fait que** le dispositif de fermeture (14) peut être manoeuvré par un dispositif d'actionnement (36) à force auxiliaire.

3. Toit de véhicule, selon la revendication 1 ou 2, **caractérisé par** au moins une partie de pavillon (30) qui est apte à l'ouverture également au cours du déplacement, et dont le montage est assuré, au moins dans sa position d'ouverture, par la partie de pavillon abaissable (12).

4. Toit de véhicule, selon les revendications 2 et 3, **caractérisé par le fait que** le dispositif d'actionnement (36) à force auxiliaire actionne aussi bien le dispositif de fermeture (14), que la partie de pavillon (30) apte à l'ouverture.

5. Toit de véhicule, selon l'une des revendications précédentes, **caractérisé par le fait que** le mécanisme abaisseur est réalisé sous la forme d'un ensemble (48) à quatre articulations.

6. Toit de véhicule, selon la revendication 5, **caractérisé par le fait que** l'ensemble (48) à quatre articulations comprend des première (50) et seconde (52) biellettes respectivement reliées, de manière pivotante, à la partie de pavillon abaissable (12) et à un palier principal (46) consigné à demeure sur la carrosserie du véhicule.

7. Toit de véhicule, selon la revendication 6, **caractérisé par le fait que** la seconde contre-butée (62) est verrouillée sur la première biellette (50) de l'ensemble (48) à quatre articulations.

8. Toit de véhicule, selon la revendication 7, **caractérisé par le fait que** la seconde contre-butée (62) est reliée, avec faculté de mouvement, à la première biellette (50) de l'ensemble (48) à quatre articulations.

9. Toit de véhicule, selon la revendication 8, **caractérisé par le fait que** la seconde contre-butée (62) est reliée, de manière pivotante, à la première biellette (50) de l'ensemble (48) à quatre articulations, l'axe de pivotement de ladite seconde contre-butée (62) s'étendant, pour l'essentiel, parallèlement aux axes de pivotement autour desquels ladite première biellette (50) dudit ensemble (48) à quatre articulations peut pivoter par rapport à la partie de pavillon abaissable (12), et au palier principal (46).

10. Toit de véhicule, selon la revendication 8 ou 9, **caractérisé par le fait que** la seconde contre-butée (62) peut être amenée, au moyen d'un système à ressort de précontrainte (70) prenant appui sur la première biellette (50) de l'ensemble (48) à quatre articulations, à une position de repos que ladite seconde contre-butée (62) prend au moins dans la mesure où elle ne coopère pas avec le dispositif de fermeture (14).

11. Toit de véhicule, selon la revendication 10, **caractérisé par le fait que** la seconde contre-butée (62) peut être amenée de sa position de repos à une position d'excursion, lors de la coopération avec le dispositif de fermeture (14), en s'opposant à l'action du système à ressort de précontrainte (70).

12. Toit de véhicule, selon la revendication 11, **caractérisé par le fait que** la seconde contre-butée (62) porte, dans la position d'excursion, contre une butée (74) qui est douée de l'élasticité du caoutchouc, et est prévue entre ladite seconde contre-butée (62) et la première biellette (50) de l'ensemble (48) à quatre articulations.

13. Toit de véhicule, selon l'une des revendications 6 à 12, **caractérisé par le fait qu'**un système à ressort (76), prenant appui contre la carrosserie du véhicule, est articulé sur la première (50) et/ou la seconde (52) biellette de l'ensemble (48) à quatre articulations, sachant qu'une force élastique, pouvant être appliquée à la partie de pavillon abaissable (caisson 12) en direction de la position soulevée, compense au moins une partie de la composante de force conditionnée par le poids de ladite partie de pavillon abaissable, agissant dans la direction d'abaissement.

14. Toit de véhicule, selon la revendication 13, **caractérisé par le fait que** le système à ressort (76) est réalisé de façon telle que la force élastique n'agisse pour l'essentiel, sur la partie de pavillon abaissable (12), qu'entre la position abaissée et une position intermédiaire précédant l'arrivée à la position soulevée.

15. Toit de véhicule, selon la revendication 14, **caractérisé par le fait que** le système à ressort (76) est articulé par l'intermédiaire d'un bras oscillant (86) qui est relié, de manière pivotante, à la première (50) ou à la seconde (52) biellette de l'ensemhle (48) à quatre articulations et qui, entre la position soulevée et la position intermédiaire de la partie de pavillon abaissable (12), désaccouple le mouvement de ladite partie de pavillon abaissable d'avec l'actionnement dudit système à ressort (76), le pivotement dudit bras oscillant (86), par rapport à ladite biellette (50, respectivement 52), étant bloqué à partir de l'instant auquel ladite position intermédiaire est atteinte.

16. Toit de véhicule, selon l'une des revendications 13 à 15, **caractérisé par le fait que** le système à ressort (76) prend appui, côté carrosserie, contre le palier principal (46).
